(19) Europäisches Patentamt
European Patent Office
Office européen des brevets

(11) EP 3 578 605 B1

(12) # EUROPEAN PATENT SPECIFICATION

(45) Date of publication and mention of the grant of the patent:
**27.10.2021 Bulletin 2021/43**

(21) Application number: **18747188.3**

(22) Date of filing: **19.01.2018**

(51) Int Cl.:
***C08L 29/04*** *(2006.01)* ***C08L 53/02*** *(2006.01)*
***B60C 1/00*** *(2006.01)* ***C08J 5/18*** *(2006.01)*
***C08L 15/02*** *(2006.01)*

(86) International application number:
**PCT/JP2018/001659**

(87) International publication number:
**WO 2018/142973 (09.08.2018 Gazette 2018/32)**

(54) **THERMOPLASTIC RESIN COMPOSITION, INNER LINER, AND PNEUMATIC TIRE**

THERMOPLASTISCHE HARZZUSAMMENSETZUNG, INNENVERKLEIDUNG UND LUFTREIFEN

COMPOSITION DE RÉSINE THERMOPLASTIQUE, REVÊTEMENT INTÉRIEUR, ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.02.2017 JP 2017016949**

(43) Date of publication of application:
**11.12.2019 Bulletin 2019/50**

(73) Proprietor: **The Yokohama Rubber Co., Ltd.**
**Minato-ku**
**Tokyo 105-8685 (JP)**

(72) Inventor: **SATO, Shun**
**Hiratsuka-shi**
**Kanagawa 254-8601 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 045 102**
**EP-A1- 3 124 538**
**WO-A1-2012/026167**
**WO-A1-2012/035828**
**WO-A1-2012/042975**
**WO-A1-2014/098155**
**WO-A1-2014/185545**
**WO-A1-2015/147148**
**WO-A1-2017/006827**
**JP-A- 2002 052 904**
**JP-A- 2007 161 822**
**JP-A- 2012 046 614**
**JP-A- 2014 121 850**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

**Description**

TECHNICAL FIELD

The present invention relates to a thermoplastic resin composition; an inner liner for a pneumatic tire, which is composed of the thermoplastic resin composition; and a pneumatic tire comprising the inner liner. More particularly, the present invention relates to a thermoplastic resin composition composed of a matrix phase that comprises an ethylene-vinyl alcohol copolymer and a dispersed phase that comprises a brominated isobutylene-p-methylstyrene copolymer; an inner liner for a pneumatic tire, which comprises of the thermoplastic resin composition; and a pneumatic tire comprising the inner liner.

BACKGROUND

There is known a thermoplastic elastomer composition in which a rubber composition containing a halogenated isoolefin-*p*-alkylstyrene copolymer is dispersed in a thermoplastic resin composition that contains a polyamide and an ethylene-vinyl alcohol copolymer or a polyvinyl alcohol, and the rubber composition is crosslinked (Japanese Unexamined Patent Publication (Kokai) No. 2012-46614).

Further, a thermoplastic elastomer composition which includes a polymer component that contains a halogenated isoolefin-*p*-alkylstyrene copolymer, an acid anhydride group-containing modified rubber and an ethylene-vinyl alcohol copolymer, along with a processing aid composed of an alkaline earth metal salt of a higher fatty acid and a crosslinking agent, is known (WO 2015/147148 A1).

[CITATION LIST]

[PATENT LITERATURE]

[PTL 1] Japanese Unexamined Patent Publication (Kokai) No. 2012-46614
[PTL 2] WO 2015/147148 A1

SUMMARY

[TECHNICAL PROBLEM]

However, these thermoplastic elastomer compositions disclosed in Japanese Unexamined Patent Publication (Kokai) No. 2012-46614 and WO 2015/147148 A1 are observed with deterioration of the gas-barrier properties caused by fatigue when used as an inner liner of a pneumatic tire.

An object of the present invention is to provide a thermoplastic resin composition comprising a matrix phase that comprises an ethylene-vinyl alcohol copolymer and a dispersed phase that comprises a brominated isobutylene-p-methylstyrene copolymer, which thermoplastic resin composition is capable of yielding, when used as a material of a tire inner liner, an inner liner that hardly exhibits deterioration of the gas-barrier properties caused by fatigue.

[SOLUTION TO PROBLEM]

The present inventor discovered that deterioration of the gas-barrier properties caused by fatigue can be efficiently suppressed by incorporating an acid-modified styrene-ethylene-butylene-styrene copolymer into a thermoplastic resin composition composed of a matrix phase comprising an ethylene-vinyl alcohol copolymer and a dispersed phase comprising a brominated isobutylene-p-methylstyrene copolymer, thereby completing the present invention.

The present invention provides a thermoplastic resin composition comprising a matrix phase that comprises an ethylene-vinyl alcohol copolymer (A), and a dispersed phase that comprises a brominated isobutylene-p-methylstyrene copolymer (B) and an acid-modified styrene-ethylene-butylene-styrene copolymer (C), wherein the thermoplastic resin composition satisfies the following formula:

$$0.02 \leq (W_B \times B_B) \times (W_C \times S_C)/(W_A \times V_A) \leq 0.85,$$

wherein

$W_A$ represents the weight ratio of the ethylene-vinyl alcohol copolymer (A) to the total weight of polymer components in the thermoplastic resin composition,
$W_B$ represents the weight ratio of the brominated isobutylene-p-methylstyrene copolymer (B) to the total weight of polymer components in the thermoplastic resin composition,
$W_C$ represents the weight ratio of the acid-modified styrene-ethylene-butylene-styrene copolymer (C) to the total weight of polymer components in the thermoplastic resin composition,
$V_A$ represents the vinyl alcohol content (% by weight) in the ethylene-vinyl alcohol copolymer (A),
$B_B$ represents the *p*-bromomethylstyrene content (% by weight) in the brominated isobutylene-*p*-methylstyrene copolymer (B), and
$S_C$ represents the styrene content (% by weight) in the acid-modified styrene-ethylene-butylene-styrene copolymer (C).

The present invention further includes the embodiments described in present claims 2 to 10.

[ADVANTAGEOUS EFFECTS OF INVENTION]

The thermoplastic resin composition of the present invention can yield an inner liner that hardly exhibits deterioration of the gas-barrier properties caused by fatigue.

DESCRIPTION OF EMBODIMENTS

The present invention provides a thermoplastic resin composition comprising a matrix phase that comprises an ethylene-vinyl alcohol copolymer (A), and a dispersed phase that comprises a brominated isobutylene-p-methylstyrene copolymer (B) and an acid-modified styrene-ethylene-butylene-styrene copolymer (C), and the thermoplastic resin composition satisfies the following formula:

$$0.02 \leq (W_B \times B_B) \times (W_C \times S_C)/(W_A \times V_A) \leq 0.85$$

wherein

$W_A$ represents the weight ratio of the ethylene-vinyl alcohol copolymer (A) to the total weight of polymer components in the thermoplastic resin composition,
$W_B$ represents the weight ratio of the brominated isobutylene-p-methylstyrene copolymer (B) to the total weight of polymer components in the thermoplastic resin composition,
$W_C$ represents the weight ratio of the acid-modified styrene-ethylene-butylene-styrene copolymer (C) to the total weight of polymer components in the thermoplastic resin composition,
$V_A$ represents the vinyl alcohol content (% by weight) in the ethylene-vinyl alcohol copolymer (A),
$B_B$ represents the *p*-bromomethylstyrene content (% by weight) in the brominated isobutylene-p-methylstyrene copolymer (B), and
$S_C$ represents the styrene content (% by weight) in the acid-modified styrene-ethylene-butylene-styrene copolymer (C).

The term "polymer components in the thermoplastic resin composition" used herein refers to at least the ethylene-vinyl alcohol copolymer (A), the brominated isobutylene-*p*-methylstyrene copolymer (B) and the acid-modified styrene-ethylene-butylene-styrene copolymer (C) and, when the thermoplastic resin composition comprises other resin(s) (e.g., a polyamide) and/or an elastomer(s) (e.g., a halogenated butyl rubber, an ethylene-propylene rubber, and an acid-modified EB), the term also encompasses such resin(s) and elastomer(s).
The ethylene-vinyl alcohol copolymer (A) contains ethylene units and vinyl alcohol units as repeating structural units, and the term "vinyl alcohol content (% by weight)" used herein refers to the number of grams of the vinyl alcohol units contained in 100 g of the ethylene-vinyl alcohol copolymer.
The brominated isobutylene-p-methylstyrene copolymer (B) contains isobutylene units, *p*-methylstyrene units and *p*-bromomethylstyrene units as repeating structural units, and the term "*p*-bromomethylstyrene content (% by weight)" used herein refers to the number of grams of the *p*-bromomethylstyrene units contained in 100 g of the brominated isobutylene-p-methylstyrene copolymer.
The acid-modified styrene-ethylene-butylene-styrene copolymer (C) contains styrene units, ethylene units and butylene units as repeating structural units, and the term "styrene content (% by weight)" used herein refers to the number of grams of the styrene units contained in 100 g of the acid-modified styrene-ethylene-butylene-styrene copolymer.

In the thermoplastic resin composition comprising a matrix phase that comprises the ethylene-vinyl alcohol copolymer (A) and a dispersed phase that comprises the brominated isobutylene-p-methylstyrene copolymer (B), by incorporating the acid-modified styrene-ethylene-butylene-styrene copolymer (C) and setting the relationship of the copolymerization ratios and the contents of these components to be in a specific range, deterioration of the gas-barrier properties of the thermoplastic resin composition caused by fatigue can be efficiently suppressed.

The value of $(W_B \times B_B) \times (W_C \times S_C)/(W_A \times V_A)$ is 0.02 to 0.85, preferably 0.05 to 0.75, more preferably 0.1 to 0.65. When the value of $(W_B \times B_B) \times (W_C \times S_C)/(W_A \times V_A)$ is excessively small, the effect of suppressing the deterioration of the gas-barrier properties caused by fatigue may not be sufficiently attained, whereas when the value of $(W_B \times B_B) \times (W_C \times S_C)/(W_A \times V_A)$ is excessively large, the film-forming properties may be deteriorated.

The thermoplastic resin composition of the present invention comprises a matrix phase and a dispersed phase. In other words, the thermoplastic resin composition of the present invention has a so-called sea-island structure. The matrix phase comprises the ethylene-vinyl alcohol copolymer (A). The dispersed phase comprises the brominated isobutylene-*p*-methylstyrene copolymer (B) and the acid-modified styrene-ethylene-butylene-styrene copolymer (C).

The ethylene-vinyl alcohol copolymer (hereinafter, also referred to as "EVOH") used in the present invention is a copolymer composed of an ethylene unit ($-CH_2CH_2-$) and a vinyl alcohol unit ($-CH_2-CH(OH)-$), and may also contain other structural unit(s) in addition to the ethylene unit and the vinyl alcohol unit within a range that does not adversely affect the effects of the present invention. The vinyl alcohol content $V_A$ in the ethylene-vinyl alcohol copolymer is not limited as long as the above-described relational formula is satisfied; however, it is preferably 50 to 90% by weight, more preferably 55 to 87% by weight, still more preferably 60 to 85% by weight. An excessively low vinyl alcohol content $V_A$ may lead to poor pre-fatigue gas-barrier properties, whereas an excessively high vinyl alcohol content $V_A$ may lead to insufficient bending fatigue resistance at low temperatures. The ethylene-vinyl alcohol copolymer is a saponification product of an ethylene-vinyl acetate copolymer, and the saponification degree thereof is preferably 90% or higher, more preferably 98% or higher. An excessively low saponification degree of the ethylene-vinyl alcohol copolymer leads to reduced gas-barrier properties and reduced thermal stability. Ethylene-vinyl alcohol copolymers are commercially available and can be obtained under the trade names of, for example, SOARNOL® from The Nippon Synthetic Chemical Industry Co., Ltd. and EVAL® from Kuraray Co., Ltd. Specific examples of commercially available ethylene-vinyl alcohol copolymer products include SOARNOL® H4815B (vinyl alcohol content $V_A$: 63% by weight), E3808 (vinyl alcohol content $V_A$: 72% by weight) and V2504 (vinyl alcohol content $V_A$: 83% by weight), which are manufactured by The Nippon Synthetic Chemical Industry Co., Ltd.

The brominated isobutylene-p-methylstyrene copolymer (B) used in the present invention can be produced by brominating a copolymer of isobutylene and *p*-methylstyrene, and the mixing ratio of isobutylene and *p*-methylstyrene, the polymerization ratio, the average molecular weight, the polymerization mode (e.g., a block copolymer or a random copolymer), the viscosity, the bromination rate and the like are not particularly limited and can be arbitrarily selected in accordance with the physical properties and the like that are demanded for the thermoplastic elastomer composition.

The brominated isobutylene-p-methylstyrene copolymer is obtained by bromination of an isobutylene-*p*-methylstyrene copolymer having a repeating unit represented by the following chemical formula (1):

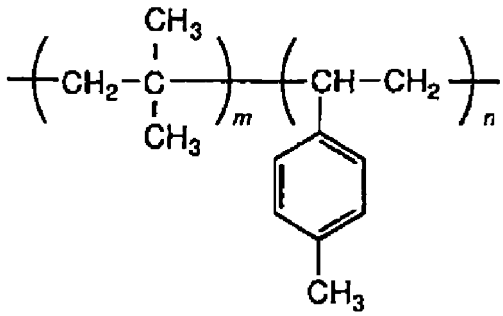

(1)

Typically, the brominated isobutylene-p-methylstyrene copolymer has a repeating structural unit represented by the following chemical formula (2):

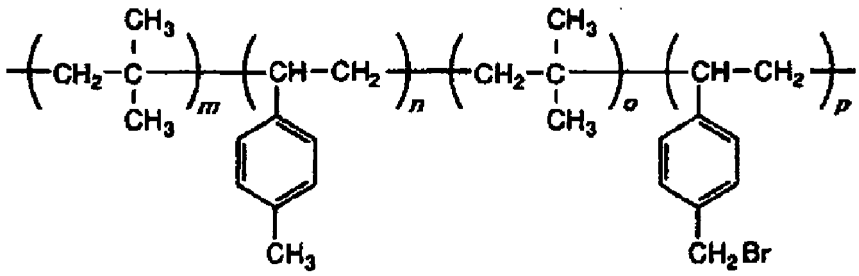

(2)

Such a brominated isobutylene-p-methylstyrene copolymer is available under the trade name of EXXPRO® from ExxonMobil Chemical Company, Inc.

The *p*-bromomethylstyrene content $B_B$ in the brominated isobutylene-p-methylstyrene copolymer (B) is not limited as long as the above-described relational formula is satisfied; however, it is preferably 1.0 to 5.0% by weight, more preferably 1.1 to 4.5% by weight, still more preferably 1.2 to 4.0% by weight. When the *p*-bromomethylstyrene content $B_B$ is excessively low, the brominated isobutylene-p-methylstyrene copolymer (B) is not finely dispersed in the ethylene-vinyl alcohol copolymer, and its modification effect as a rubber may thus be insufficient, whereas when the *p*-bromomethylstyrene content $B_B$ is excessively high, the fluidity is insufficient due to enhanced interaction with the vinyl alcohol of the ethylene-vinyl alcohol copolymer, and this may lead to deterioration of the film-forming properties.

It is preferable that the brominated isobutylene-p-methylstyrene copolymer be dynamically cross-linked with a crosslinking agent. By dynamically crosslinking the brominated isobutylene-p-methylstyrene copolymer, the matrix phase and the dispersed phase of the thermoplastic resin composition can be fixed. The dynamic crosslinking can be performed by melt-kneading the brominated isobutylene-p-methylstyrene copolymer together with the crosslinking agent.

Examples of the crosslinking agent used in the dynamic crosslinking include zinc white, stearic acid, zinc stearate, magnesium oxide, m-phenylene bismaleimide, alkyl phenol resins and halides thereof, and secondary amines. Examples of the secondary amines that can be used as the crosslinking agent include *N*-(1,3-dimethylbutyl)-*N'*-phenyl-*p*-phenylenediamine and polymerized 2,2,4-trimethyl-1,2-dihydroquinoline. Thereamong, zinc white, stearic acid, zinc stearate, or *N*-(1,3-dimethylbutyl)-*N'*-phenyl-*p*-phenylenediamine can be used as the crosslinking agent for the dynamic crosslinking.

The amount of the crosslinking agent is preferably 4 to 12 parts by weight, more preferably 6 to 9 parts by weight, based on 100 parts by weight of the brominated isobutylene-*p*-methylstyrene copolymer. An excessively small amount of the crosslinking agent leads to insufficient dynamic crosslinking; therefore, the brominated isobutylene-*p*-methylstyrene copolymer cannot be maintained in a finely dispersed state, and the durability is reduced. Meanwhile, an excessively large amount of the crosslinking agent causes scorching during kneading or processing, and generation of a foreign matter in a film.

The acid-modified styrene-ethylene-butylene-styrene copolymer (C) used in the present invention is obtained by modifying a styrene-ethylene-butylene-styrene copolymer (hereinafter, also referred to as "SEBS") with an acid, and examples thereof include maleic anhydride-modified styrene-ethylene-butylene-styrene copolymers and carboxyl-modified styrene-ethylene-butylene-styrene copolymers. Examples of commercially available acid-modified styrene-ethylene-butylene-styrene copolymer products include KRATON® FG1924 manufactured by Kraton Corporation, TUFTEC® M1913 and M1943 manufactured by Asahi Kasei Chemicals Corporation, and f-DYNARON® F8660P manufactured by JSR Corporation.

The styrene content $S_C$ in the acid-modified styrene-ethylene-butylene-styrene copolymer (C) is not particularly limited as long as the above-described relational formula is satisfied; however, it is preferably 5 to 40% by weight, more preferably 8 to 36% by weight, still more preferably 10 to 32% by weight. When the styrene content $S_C$ is excessively low, the effect of suppressing a change in the gas-barrier properties caused by fatigue may be insufficient, whereas when the styrene content $S_C$ is excessively high, the acid-modified styrene-ethylene-butylene-styrene copolymer (C) is not finely dispersed in the ethylene-vinyl alcohol copolymer, and its modification effect as an elastomer may thus be insufficient.

The acid value of the acid-modified styrene-ethylene-butylene-styrene copolymer (C) is preferably, but not limited to, 0.5 to 30 mg-$CH_3ONa$/g, more preferably 1.0 to 25 mg-$CH_3ONa$/g, still more preferably 1.5 to 20 mg-$CH_3ONa$/g. When the acid value is excessively low, the acid-modified styrene-ethylene-butylene-styrene copolymer (C) is not finely dispersed in the ethylene-vinyl alcohol copolymer, and its modification effect as an elastomer may thus be insufficient, whereas when the acid value is excessively high, the fluidity is reduced due to enhanced interaction with the vinyl alcohol of the ethylene-vinyl alcohol copolymer, and this may lead to deterioration of the film-forming properties.

As for the acid value of the acid-modified styrene-ethylene-butylene-styrene copolymer (C), 1 g of the acid-modified styrene-ethylene-butylene-styrene copolymer is neutralization-titrated with sodium methoxide ($CH_3ONa$), and

the mass (mg) of sodium methoxide ($CH_3ONa$) used can be determined as the acid value.

The weight ratio (B)/(C) of the brominated isobutylene-p-methylstyrene copolymer (B) to the acid-modified styrene-ethylene-butylene-styrene copolymer (C) is preferably 60/40 to 10/90, more preferably 55/45 to 20/85, still more preferably 50/50 to 30/70. An excessively low weight ratio (B)/(C) may lead to insufficient pre-fatigue gas-barrier properties, whereas an excessively high weight ratio (B)/(C) may lead to insufficient durability at low temperatures.

The amount of the ethylene-vinyl alcohol copolymer (A) to be incorporated is preferably 20 to 300 parts by weight, more preferably 30 to 250 parts by weight, still more preferably 40 to 220 parts by weight, based on 100 parts by weight of the elastomer components in the dispersed phase. When the ethylene-vinyl alcohol copolymer (A) is incorporated in an excessively small amount, the gas-barrier properties may be insufficient, whereas when the ethylene-vinyl alcohol copolymer (A) is incorporated in an excessively large amount, the durability at low temperatures and the flexibility may be insufficient.

The term "elastomer components in the dispersed phase" used herein refers to at least the brominated isobutylene-*p*-methylstyrene copolymer (B) and the acid-modified styrene-ethylene-butylene-styrene copolymer (C) and, when other elastomer(s) (e.g., a halogenated butyl rubber, an ethylene-propylene rubber, and an acid-modified EB) is/are contained in the dispersed phase, the term also encompasses such elastomer(s). In other words, when the dispersed phase comprises only two kinds of elastomers which are the brominated isobutylene-*p*-methylstyrene copolymer (B) and the acid-modified styrene-ethylene-butylene-styrene copolymer (C), the amount of the incorporated ethylene-vinyl alcohol copolymer (A) is calculated based on 100 parts by weight of the total weight of the brominated isobutylene-*p*-methylstyrene copolymer (B) and the acid-modified styrene-ethylene-butylene-styrene copolymer (C). When the dispersed phase comprises other elastomer(s) in addition to the brominated isobutylene-*p*-methylstyrene copolymer (B) and the acid-modified styrene-ethylene-butylene-styrene copolymer (C), the amount of the incorporated ethylene-vinyl alcohol copolymer (A) is calculated based on 100 parts by weight of the total weight of the brominated isobutylene-*p*-methylstyrene copolymer (B), the acid-modified styrene-ethylene-butylene-styrene copolymer (C), and the other elastomer(s).

It is preferable that the thermoplastic resin composition of the present invention further comprises a metallic soap (D). Examples of the metallic soap (D) include an alkaline earth metal salt of a higher fatty acid. Specific examples of an alkaline earth metal salt of a higher fatty acid include magnesium stearate, calcium stearate, barium stearate, magnesium laurate, calcium laurate and barium laurate, among which magnesium stearate is preferable. The amount of the metallic soap (D) to be incorporated is preferably, but not limited to, 0 to 20 parts by weight, more preferably 0.5 to 15 parts by weight, still more preferably 1.0 to 10 parts by weight, based on 100 parts by weight of the elastomer components. By incorporating the metallic soap (D), the lubricity is improved and the extrusion load during melt-molding is reduced, so that the generation of residues is suppressed. When the metallic soap (D) is incorporated in an excessively large amount, the durability at low temperatures may be deteriorated.

The thermoplastic resin composition of the present invention may also comprise a resin other than the ethylene-vinyl alcohol copolymer(A), an elastomer other than the brominated isobutylene-*p*-methylstyrene copolymer (B) and the acid-modified styrene-ethylene-butylene-styrene copolymer (C), and various additives within a range that does not adversely affect the effects of the present invention. Examples of the additives include a crosslinking agent, an age inhibitor, a plasticizer, a processing aid, a crosslinking accelerator aid, a crosslinking accelerator, a reinforcing agent (a filler), an antiscorching agent, a peptizing agent, an organic modifier, a softening agent, and a tackifier.

The thermoplastic resin composition of the present invention can be produced by, but not limited to, melt-kneading an ethylene-vinyl alcohol copolymer, a brominated isobutylene-*p*-methylstyrene copolymer, an acid-modified styrene-ethylene-butylene-styrene copolymer and, as required, a metallic soap and other component(s). When the crosslinking agent is added, the crosslinking agent may be mixed with the brominated isobutylene-p-methylstyrene copolymer in advance, or it may be added before or during the melt-kneading. The melt-kneading temperature is a temperature of not lower than the melting point of a polymer having the highest melting point among the polymer components constituting the thermoplastic resin composition, and it is preferably 20°C higher than this melting point, for example, 160 to 280°C. The melt-kneading time is usually 1 to 10 minutes, preferably 1 to 5 minutes.

The thermoplastic resin composition of the present invention can be preferably produced by continuously kneading an ethylene-vinyl alcohol copolymer, a brominated isobutylene-*p*-methylstyrene copolymer and an acid-modified styrene-ethylene-butylene-styrene copolymer using a biaxial kneader and thereby not only dispersing the brominated isobutylene-*p*-methylstyrene copolymer and the acid-modified styrene-ethylene-butylene-styrene copolymer in a matrix phase composed of the ethylene-vinyl alcohol copolymer but also performing dynamic crosslinking.

More specifically, for example, a rubber compound is prepared by mixing a brominated isobutylene-*p*-methylstyrene copolymer, an acid-modified styrene-ethylene-butylene-styrene copolymer, a crosslinking agent and, as required, other additive(s) at 60 to 150°C, the thus obtained rubber compound, an ethylene-vinyl alcohol copolymer and, as required, other resin(s) or additive(s) are loaded to a biaxial kneader having a preset temperature of 220 to 250°C, and then the brominated isobutylene-*p*-methylstyrene copolymer and the acid-modified styrene-ethylene-butylene-styrene copolymer are dispersed and dynamically crosslinked, whereby the thermoplastic resin composition of the present

invention can be obtained.

The present invention also provides an inner liner for a pneumatic tire, which comprises the above-described thermoplastic resin composition.

The thermoplastic resin composition of the present invention can be made into a film using, for example, an extruder equipped with a T-die or an inflation molding machine. The film composed of the thermoplastic resin composition of the present invention has excellent gas-barrier properties and durability and, therefore, can be suitably used as an inner liner of a pneumatic tire.

The present invention also provides a pneumatic tire comprising the above-described inner liner.

The pneumatic tire of the present invention is more specifically a pneumatic tire comprising a film of the above-described thermoplastic resin composition as an inner liner. As a method of producing the pneumatic tire, any commonly-used method can be employed. For example, the thermoplastic resin composition of the present invention is extruded into the form of a film having a prescribed width and a prescribed thickness, and this film is attached onto a tire molding drum in a cylindrical form as an inner liner. Subsequently, members that are used in ordinary tire production, such as a carcass layer, a belt layer and a tread layer that are composed of unvulcanized rubber, are sequentially laminated on the inner liner, and the resultant is pulled out from the drum to obtain a green tire. Thereafter, this green tire is heat-vulcanized in accordance with a conventional method, whereby a desired pneumatic tire can be produced.

EXAMPLES

The present invention will now be described in more detail by way of Examples thereof; however, the present invention is not limited to the below-described Examples.

[Raw Materials]

The raw materials used in the below-described Examples and Comparative Examples are as follows.

The following three products were used as an ethylene-vinyl alcohol copolymer (hereinafter, also referred to as "EVOH").

SOARNOL® V2504, manufactured by The Nippon Synthetic Chemical Industry Co., Ltd., and having a vinyl alcohol content $V_A$ of 83% by weight
SOARNOL® E3808, manufactured by The Nippon Synthetic Chemical Industry Co., Ltd., and a vinyl alcohol content $V_A$ of 72% by weight
SOARNOL® H4815B, manufactured by The Nippon Synthetic Chemical Industry Co., Ltd., and having a vinyl alcohol content $V_A$ of 63% by weight

The following three products were used as a brominated isobutylene-*p*-methylstyrene copolymer (hereinafter, also referred to as "Br-IPMS").

EXXPRO® 3745: a brominated isobutylene-*p*-methylstyrene copolymer rubber, manufactured by ExxonMobil Chemical Company, Inc., and having a *p*-bromomethylstyrene content $B_B$ of 3.9% by weight
EXXPRO® MDX89-4: a brominated isobutylene-*p*-methylstyrene copolymer rubber, manufactured by ExxonMobil Chemical Company, Inc., and having a *p*-bromomethylstyrene content $B_B$ of 2.5% by weight
EXXPRO® 3035: a brominated isobutylene-p-methylstyrene copolymer rubber, manufactured by ExxonMobil Chemical Company, Inc., and having a *p*-bromomethylstyrene content $B_B$ of 1.6% by weight

The following was used as other brominated rubber.
Br-IIR: a brominated butyl rubber BROMO BUTYL, manufactured by ExxonMobil Chemical Company, Inc., and having a *p*-bromomethylstyrene content $B_B$ of 0% by weight

The following four products were used as an acid-modified styrene-ethylene-butylene-styrene copolymer.

KRATON® FG1924: a maleic anhydride-modified styrene-ethylene-butylene-styrene copolymer, manufactured by Kraton Corporation, and a styrene content $S_C$ of 13% by weight
TUFTEC® M1943: a maleic anhydride-modified styrene-ethylene-butylene-styrene copolymer, manufactured by Asahi Kasei Chemicals Corporation, and having a styrene content $S_C$ of 20% by weight
f-DYNARON® 8660P: a maleic anhydride-modified styrene-ethylene-butylene-styrene copolymer, manufactured by JSR Corporation, and having a styrene content $S_C$ of 25% by weight
TUFTEC® M1913: a maleic anhydride-modified styrene-ethylene-butylene-styrene copolymer, manufactured by Asahi Kasei Chemicals Corporation, and having a styrene content $S_C$ of 30% by weight

The following was used as other acid-modified rubber.

Acid-modified EB: a maleic anhydride-modified ethylene-1-butene, TAFMER® MH7010, manufactured by Mitsui Chemicals, Inc., and having a styrene content $S_C$ of 0% by weight

The following was used as other polymer component.

Nylon 6: UBE NYLON 1030B, manufactured by UBE Industries, Ltd.

The following was used as a metallic soap.

St-Mg: magnesium stearate, SM-PG, manufactured by Sakai Chemical Industry Co., Ltd.

[Preparation of Thermoplastic Resin Compositions]

In accordance with the respective formulations shown in Tables 1 and 2, an ethylene-vinyl alcohol copolymer (A), a brominated isobutylene-*p*-methylstyrene copolymer (B), an acid-modified styrene-ethylene-butylene copolymer (C) and other components were introduced to a cylinder of a biaxial kneading extruder manufactured by The Japan Steel Works, Ltd. and then transferred to a kneading zone where the temperature was set at 230°C and the retention time was set at about 3 to 8 minutes, and these materials were melt-kneaded, after which the resulting melt-kneaded product was extruded in the shape of a strand from a die attached to a discharge port. The thus obtained strand-shaped extrudate was pelletized using a resin pelletizer to obtain a pellet-shaped thermoplastic resin composition. For this thermoplastic resin composition, the rate of change in the air permeability coefficient due to fatigue was evaluated. The evaluation results are shown in Tables 1 and 2.

[Rate of Change in Air Permeability Coefficient Due to Fatigue]

Each pellet-shaped thermoplastic resin composition prepared above was molded into a film of 0.1 mm in average thickness using a 40-mmφ uniaxial extruder equipped with a 550 mm-wide T-die manufactured by Pla Giken Co., Ltd. under the extrusion conditions having extrusion temperatures in C1/C2/C3/C4/die of 220/225/230/235/235°C, a cooling roll temperature of 50°C, and a drawing rate of 4 m/min. The thus obtained film was cut out at a prescribed size and laminated with a sheet having an average thickness of 0.1 mm of an unvulcanized rubber composition having the formulation shown in Table 3, and the film and the sheet were subsequently adhered by vulcanizing at 180°C for 10 minutes, whereby a laminate of the thermoplastic resin composition and the rubber composition was obtained. This laminate was cut out at a width of 5 cm and repeatedly deformed 1,000,000 times using a constant strain tester manufactured by Ueshima Seisakusho Co., Ltd. The air permeability coefficient of the laminate was measured at a temperature of 23°C and a humidity of 0% RH before and after the repeated deformation, and the rate of change in the air permeability coefficient due to fatigue was calculated using the following equation:

Rate of change in air permeability coefficient due to fatigue = Air permeability coefficient after deformation/Air permeability coefficient before deformation.

The laminate was evaluated to be satisfactory i.e., have a suppression effect, when the rate of change in the air permeability coefficient due to fatigue was 2.0 or lower.

Table 1

| | | | | Comparative Example 1 | Example 1 | Example 2 | Example 3 | Example 4 | Example 5 | Example 6 |
|---|---|---|---|---|---|---|---|---|---|---|
| EVOH resin | SOARNOL® V2504 | $V_A$ (% by weight) = 83 | parts by weight | | | | | | | |
| | SOARNOL® E3808 | $V_A$ (% by weight) = 72 | parts by weight | 50 | 50 | 40 | | | | |
| | SOARNOL® H4815B | $V_A$ (% by weight) = 63 | parts by weight | | | | 40 | 40 | 40 | 40 |
| Br-IPMS | EXXPRO® 3745 | $B_B$ (% by weight) = 3.9 | parts by weight | | | | | | | |
| | EXXPRO® MDX89-4 | $B_B$ (% by weight) = 2.5 | parts by weight | 30 | 30 | 40 | 40 | 40 | 45 | 45 |
| | EXXPRO® 3035 | $B_B$ (% by weight) = 1.6 | parts by weight | | | | | | | |
| Br-IIR | BROMO BUTYL | $B_B$ (% by weight) = 0 | parts by weight | | | | | | | |

(continued)

| | | | | Comparative Example 1 | Example 1 | Example 2 | Example 3 | Example 4 | Example 5 | Example 6 |
|---|---|---|---|---|---|---|---|---|---|---|
| Acid-modified SEBS | KRATON® FG1924 | $S_C$ (% by weight) = 13 | parts by weight | | 70 | | | | | |
| | TUFTEC® M1943 | $S_C$ (% by weight) = 20 | parts by weight | | | 60 | | | | |
| | f-DYNARON® 8660P | $S_C$ (% by weight) = 25 | parts by weight | | | | 60 | | | |
| | TUFTEC® M1913 | $S_C$ (% by weight) = 30 | parts by weight | | | | | 60 | 55 | 55 |
| Acid-modified EB | TAFMER® MH7010 | Sc (% by weight) = 0 | parts by weight | 70 | | | | | | |
| Other polymer component | UBE NYLON 1030B | | parts by weight | | | | | | | |
| Metallic soap | St-Mg | | parts by weight | 2 | 2 | 2 | 2 | 2 | 2 | |
| WA | | | | 0.33 | 0.33 | 0.29 | 0.29 | 0.29 | 0.29 | 0.29 |
| $W_B$ | | | | 0.20 | 0.20 | 0.29 | 0.29 | 0.29 | 0.32 | 0.32 |
| $W_C$ | | | | 0.47 | 0.47 | 0.43 | 0.43 | 0.43 | 0.39 | 0.39 |
| $(WA \times B_B) \times (W_C \times S_C)/(W_A \times V_A)$ | | | | 0.0 | 0.13 | 0.30 | 0.37 | 0.45 | 0.53 | 0.53 |
| Rate of change in air permeability coefficient due to fatigue | | | | 2.5 | 1.6 | 1.4 | 1.3 | 1.2 | 1.4 | 1.5 |

Table 2

| | | | | Comparative Example 2 | Comparative Example 3 | Example 7 | Example 8 | Comparative Example 4 | Example 9 | Example 10 |
|---|---|---|---|---|---|---|---|---|---|---|
| EVOH resin | SOARNOL® V2504 | $V_A$ (% by weight) = 83 | parts by weight | | 200 | 100 | | | | |
| | SOARNOL® E3808 | $V_A$ (% by weight) = 72 | parts by weight | 50 | | | | | 50 | 50 |
| | SOARNOL® H4815B | $V_A$ (% by weight) = 63 | parts by weight | | | | 40 | 30 | | |
| Br-IPMS | EXXPRO® 3745 | $B_B$ (% by weight) = 3.9 | parts by weight | | | | 40 | 30 | | |
| | EXXPRO® MDX89-4 | $B_B$ (% by weight) = 2.5 | parts by weight | | | | | | 40 | 50 |
| | EXXPRO® 3035 | $B_B$ (% by weight) = 1.6 | parts by weight | | 60 | 50 | | | | |
| Br-IIR | BROMO BUTYL | $B_B$ (% by weight) = 0 | parts by weight | 30 | | | | | | |

(continued)

| | | | | Comparative Example 2 | Comparative Example 3 | Example 7 | Example 8 | Comparative Example 4 | Example 9 | Example 10 |
|---|---|---|---|---|---|---|---|---|---|---|
| Acid-modified SEBS | KRATON® FG1924 | $S_C$ (% by weight) = 13 | parts by weight | | 40 | 50 | | | | |
| | TUFTEC® M1943 | $S_C$ (% by weight) = 20 | parts by weight | | | | | | 60 | 40 |
| | f-DYNARON® 8660P | $S_C$ (% by weight) = 25 | parts by weight | | | | | | | |
| | TUFTEC® M1913 | $S_C$ (% by weight) = 30 | parts by weight | 70 | | | 60 | 70 | | |
| Acid-modified EB | TAFMER® MH7010 | $S_C$ (% by weight) = 0 | parts by weight | | | | | | | 20 |
| Other polymer component | UBE NYLON 1030B | | parts by weight | | | | | 10 | 20 | |
| Metallic soap | St-Mg | | parts by weight | 2 | 2 | 2 | 2 | 2 | 2 | 2 |
| WA | | | | 0.33 | 0.67 | 0.50 | 0.29 | 0.21 | 0.29 | 0.31 |
| $W_B$ | | | | 0.20 | 0.20 | 0.25 | 0.29 | 0.21 | 0.24 | 0.31 |
| $W_C$ | | | | 0.47 | 0.13 | 0.25 | 0.43 | 0.50 | 0.35 | 0.38 |
| $(W_A \times B_B) \times (W_C \times S_C)/(W_A \times V_A)$ | | | | 0.0 | 0.01 | 0.03 | 0.80 | 0.93 | 0.20 | 0.26 |
| Rate of change in air permeability coefficient due to fatigue | | | | 2.4 | 2.3 | 1.9 | 1.6 | film could not be formed | 1.5 | 1.5 |

Table 3: Formulation of Unvulcanized Rubber Composition

| Raw materials | Amount (parts by weight) |
|---|---|
| Halogenated butyl rubber(1) | 100 |
| GPF carbon black(2) | 30 |
| Wet silica(3) | 20 |
| Aromatic oil(4) | 7.5 |
| Zinc white(5) | 3 |
| Stearic acid(6) | 1 |
| Sulfur(7) | 1 |
| Vulcanization accelerator(8) | 1.5 |
| Total | 164 |

Footnote: (1) BROMOBUTYL X2, manufactured by LANXESS Rubber Corporation (2) HTC #G, manufactured by NSCC Carbon Co., Ltd. (3) ZEOSIL® 165GR, manufactured by Rhodia Corporation (4) EXTRACT 4S, manufactured by Showa Shell Sekiyu K.K. (5) zinc oxide #3, manufactured by Seido Chemical Industry Co., Ltd. (6) beads stearic acid YR, manufactured by NOF Corporation (7) "GOLDEN FLOWER" SULFUR POWDER, 150 mesh, manufactured by Tsurumi Chemical Industry Co., Ltd. (8) NOCCELER DM, manufactured by Ouchi Shinko Chemical Industrial Co., Ltd.

INDUSTRIAL APPLICABILITY

The thermoplastic resin composition of the present invention can be suitably utilized for the production of an inner liner for pneumatic tires.

## Claims

1. A thermoplastic resin composition comprising

   a matrix phase that comprises an ethylene-vinyl alcohol copolymer (A), and
   a dispersed phase that comprises a brominated isobutylene-p-methylstyrene copolymer (B) and an acid-modified styrene-ethylene-butylene-styrene copolymer (C),
   wherein the thermoplastic resin composition satisfies the following formula:

$$0.02 \leq (W_B \times B_B) \times (W_C \times S_C)/(W_A \times V_A) \leq 0.85$$

   wherein

   WA represents the weight ratio of the ethylene-vinyl alcohol copolymer (A) to the total weight of polymer components in the thermoplastic resin composition,
   $W_B$ represents the weight ratio of the brominated isobutylene-*p*-methylstyrene copolymer (B) to the total weight of polymer components in the thermoplastic resin composition,
   $W_C$ represents the weight ratio of the acid-modified styrene-ethylene-butylene-styrene copolymer (C) to the total weight of polymer components in the thermoplastic resin composition,
   $V_A$ represents the vinyl alcohol content (% by weight) in the ethylene-vinyl alcohol copolymer (A),
   $B_B$ represents the *p*-bromomethylstyrene content (% by weight) in the brominated isobutylene-p-methylstyrene copolymer (B), and
   $S_C$ represents the styrene content (% by weight) in the acid-modified styrene-ethylene-butylene-styrene copolymer (C).

2. The thermoplastic resin composition according to claim 1, wherein the acid-modified styrene-ethylene-butylene-styrene copolymer (C) has an acid value of 0.5 to 30 mg-$CH_3ONa$/g.

3. The thermoplastic resin composition according to claim 1 or 2, wherein a weight ratio (B)/(C) of the brominated isobutylene-*p*-methylstyrene copolymer (B) and the acid-modified styrene-ethylene-butylene-styrene copolymer (C) is 60/40 to 10/90.

4. The thermoplastic resin composition according to any one of claims 1 to 3, comprising 20 to 300 parts by weight of the ethylene-vinyl alcohol copolymer (A) based on 100 parts by weight of elastomer components in the dispersed phase.

5. The thermoplastic resin composition according to any one of claims 1 to 4, wherein the vinyl alcohol content $V_A$ (% by weight) in the ethylene-vinyl alcohol copolymer (A) is 50 to 90.

6. The thermoplastic resin composition according to any one of claims 1 to 5, wherein the *p*-bromomethylstyrene content $B_B$ (% by weight) in the brominated isobutylene-*p*-methylstyrene copolymer (B) is 1.0 to 5.0.

7. The thermoplastic resin composition according to any one of claims 1 to 6, wherein the styrene content $S_C$ (% by weight) in the acid-modified styrene-ethylene-butylene-styrene copolymer (C) is 5 to 40.

8. The thermoplastic resin composition according to any one of claims 1 to 7, further comprising a metallic soap (D).

9. An inner liner for a pneumatic tire, comprising the thermoplastic resin composition according to any one of claims 1 to 8.

10. A pneumatic tire comprising the inner liner according to claim 9.

## Patentansprüche

1. Thermoplastische Harzzusammensetzung, umfassend

   eine Matrixphase, die ein Ethylen-Vinylalkohol Copolymer (A) umfasst, und
   eine dispergierte Phase, die ein bromiertes Isobutylen-p-Methylstyrol Copolymer (B) und ein Säure-modifiziertes Styrol-Ethylen-Butylen-Styrol Copolymer (C) umfasst,
   wobei die thermoplastische Harzzusammensetzung die folgende Formel erfüllt:

$$0{,}02 \leq (W_B \times B_B) \times (W_C \times S_C)/(W_A \times V_A) \leq 0{,}85$$

   worin

   $W_A$ für das Gewichtsverhältnis des Ethylen-Vinylalkohol Copolymers (A) zu dem Gesamtgewicht an Polymerkomponenten in der thermoplastischen Harzzusammensetzung steht,
   $W_B$ steht für das Gewichtsverhältnis des bromierten Isobutylen-p-Methylstyrol Copolymers (B) zu dem Gesamtgewicht an Polymerkomponenten in der thermoplastischen Harzzusammensetzung,
   $W_C$ steht für das Gewichtsverhältnis des Säure-modifizierten Styrol-Ethylen-Butylen-Styrol Copolymers (C) zu dem Gesamtgewicht an Polymerkomponenten in der thermoplastischen Harzzusammensetzung,
   $V_A$ steht für den Vinylalkoholgehalt (Gewichts-%) in dem Ethylen-Vinylalkohol Copolymer (A),
   $B_B$ steht für den p-Brommethylstyrolgehalt (Gewichts-%) in dem bromierten Isobutylen-p-Methylstyrol Copolymer (B), und
   $S_C$ steht für den Styrolgehalt (Gewichts-%) in dem Säure-modifizierten Styrol-Ethylen-Butylen-Styrol Copolymer (C).

2. Thermoplastische Harzzusammensetzung gemäß Anspruch 1, wobei das Säure-modifizierte Styrol-Ethylen-Butylen-Styrol Copolymer (C) einen Säurewert von 0,5 bis 30 mg-$CH_3ONa$/g aufweist.

3. Thermoplastische Harzzusammensetzung gemäß Anspruch 1 oder 2, wobei ein Gewichtsverhältnis (B)/(C) des bromierten Isobutylen-p-Methylstyrol Copolymers (B) und des Säure-modifizierten Styrol-Ethylen-Butylen-Styrol Copolymers (C) 60/40 bis 10/90 beträgt.

4. Thermoplastische Harzzusammensetzung gemäß mindestens einem der Ansprüche 1 bis 3, umfassend 20 bis 300

Gewichtsteile des Ethylen-Vinylalkohol Copolymers (A) bezogen auf 100 Gewichtsteile an Elastomerkomponenten in der dispergierten Phase.

**5.** Thermoplastische Harzzusammensetzung gemäß mindestens einem der Ansprüche 1 bis 4, wobei der Vinylalkoholgehalt $V_A$ (Gewichts-%) in dem Ethylen-Vinylalkohol Copolymer (A) 50 bis 90 beträgt.

**6.** Thermoplastische Harzzusammensetzung gemäß mindestens einem der Ansprüche 1 bis 5, wobei der p-Brommethylstyrolgehalt $B_B$ (Gewichts-%) in dem bromierten Isobutylen-p-Methylstyrol Copolymer (B) 1,0 bis 5,0 beträgt.

**7.** Thermoplastische Harzzusammensetzung gemäß mindestens einem der Ansprüche 1 bis 6, wobei der Styrolgehalt $S_C$ (Gewichts-%) in dem Säure-modifizierten Styrol-Ethylen-Butylen-Styrol Copolymer (C) 5 bis 40 beträgt.

**8.** Thermoplastische Harzzusammensetzung gemäß mindestens einem der Ansprüche 1 bis 7, ferner umfassend eine metallische Seife (D).

**9.** Innenverkleidung für einen Luftreifen, welche die thermoplastische Harzzusammensetzung gemäß mindestens einem der Ansprüche 1 bis 8 umfasst.

**10.** Luftreifen, der die Innenverkleidung gemäß Anspruch 9 umfasst.

## Revendications

**1.** Composition de résine thermoplastique comprenant

une phase matricielle qui comprend un copolymère éthylène-alcool vinylique (A), et
une phase dispersée qui comprend un copolymère isobutylène-*p*-méthylstyrène bromé (B) et un copolymère styrène-éthylène-butylène-styrène modifié à l'acide (C),
dans laquelle la composition de résine thermoplastique satisfait la formule suivante :

$$0{,}02 \leq (W_B \times B_B) \times (W_C \times S_C)/(W_A \times V_A) \leq 0{,}85$$

dans laquelle

$W_A$ représente le rapport pondéral du copolymère éthylène-alcool vinylique (A) sur le poids total des composants polymères dans la composition de résine thermoplastique,
$W_B$ représente le rapport pondéral du copolymère isobutylène-*p*-méthylstyrène bromé (B) sur le poids total des composants polymères dans la composition de résine thermoplastique,
$W_C$ représente le rapport pondéral du copolymère styrène-éthylène-butylène-styrène modifié à l'acide (C) sur le poids total des composants polymères dans la composition de résine thermoplastique,
$V_A$ représente la teneur en alcool vinylique (% en poids) dans le copolymère éthylène-alcool vinylique (A),
$B_B$ représente la teneur en *p*-bromométhylstyrène (% en poids) dans le copolymère isobutylène-*p*-méthylstyrène bromé (B), et
$S_C$ représente la teneur en styrène (% en poids) dans le copolymère styrène-éthylène-butylène-styrène modifié à l'acide (C).

**2.** Composition de résine thermoplastique selon la revendication 1, dans laquelle le copolymère styrène-éthylène-butylène-styrène modifié à l'acide (C) présente un indice d'acide de 0,5 à 30 mg-$CH_3ONa$/g.

**3.** Composition de résine thermoplastique selon la revendication 1 ou 2, dans laquelle un rapport pondéral (B)/(C) du copolymère isobutylène-*p*-méthylstyrène bromé (B) et du copolymère styrène-éthylène-butylène-styrène modifié à l'acide (C) est de 60/40 à 10/90.

**4.** Composition de résine thermoplastique selon l'une quelconque des revendications 1 à 3, comprenant 20 à 300 parties en poids du copolymère éthylène-alcool vinylique (A) sur la base de 100 parties en poids de composants élastomères dans la phase dispersée.

**5.** Composition de résine thermoplastique selon l'une quelconque des revendications 1 à 4, dans laquelle la teneur en alcool vinylique $V_A$ (% en poids) dans le copolymère d'éthylène-alcool vinylique (A) est de 50 à 90.

**6.** Composition de résine thermoplastique selon l'une quelconque des revendications 1 à 5, dans laquelle la teneur en p-bromométhylstyrène $B_B$ (% en poids) dans le copolymère isobutylène-*p*-méthylstyrène bromé (B) est de 1,0 à 5,0.

**7.** Composition de résine thermoplastique selon l'une quelconque des revendications 1 à 6, dans laquelle la teneur en styrène $S_C$ (% en poids) dans le copolymère styrène-éthylène-butylène-styrène modifié à l'acide (C) est de 5 à 40.

**8.** Composition de résine thermoplastique selon l'une quelconque des revendications 1 à 7, comprenant en outre un savon métallique (D).

**9.** Revêtement intérieur pour un pneumatique, comprenant la composition de résine thermoplastique selon l'une quelconque des revendications 1 à 8.

**10.** Pneumatique comprenant le revêtement intérieur selon la revendication 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012046614 A
- WO 2015147148 A1